# EUROPEAN PATENT SPECIFICATION

(11) **EP 2 567 833 B1**
(45) Date of publication and mention of the grant of the patent: **20.08.2014**
(21) Application number: 12182881.8
(22) Date of filing: 04.09.2012
(51) Int. Cl.: B60C 19/08, B60C 19/00

(54) **Pneumatic tire with conductive cords**
Luftreifen mit leitfähigen Cords
Pneu avec cordons conducteurs

(30) Priority: 06.09.2011 US 201113225657
(43) Date of publication of application: 13.03.2013
(73) Proprietor: The Goodyear Tire & Rubber Company, Akron, OH 44316-0001 (US)
(72) Inventor: Kanz, Carlo, L-8249 Mamer (LU); Kaes, Christian, L-9184 Schrondweiler (LU); Pagliarini, Olivio Jean-Baptiste, L-6212 Consdorf (LU); Beck, Raphael, L-8558 Reichlange (LU)
(74) Representative: Kutsch, Bernd

(56) References cited:
- EP-A1- 0 514 823
- US-A- 4 363 346

## Description

### Field of Invention

The present invention relates to pneumatic tires and, more particularly, to cords in a pneumatic tire that conduct electricity or both bleed air and conduct electricity.

### Background of the Invention

In the curing of a pneumatic tire, the presence of air or other compressible gases within the body of the tire being cured may cause defects which are known as blows or blisters. These defects may involve local separation between the rubber and one or more of the reinforcement cords which make up the reinforcing ply of a pneumatic tire. Air may become trapped in or between the layers of materials which are superimposed in the course of building the tire or may in some instances enter into the tire during the time lapse between the building of the tire and the placing of the tire into a mold in which it will be cured. Further, small quantities of air may be forced into the body of the uncured tire by the closing of the mold.

Conventional tire reinforcement cords may contain passages extending generally throughout the length of the cord, lying between and bounded by the filaments which make up the cords, and that air or other gases may travel along such passages.

US-B1-6,254,989 describes the use of gas absorbing bleeder cords in a tire carcass ply.

US-B-4,363,346 discloses a pneumatic tire showing the features of the preamble of claim 1.

It has been observed that the treatment of tire reinforcement cords such as stretching of heated cords, for example cords made of continuous synthetic resin filament materials such as polyester and nylon, may significantly reduce the cross sectional area of the interfilamentary passages. Stretching of heated cords may result in a reduction of a cross sectional area of the individual filaments and a compacting of the filaments more closely to one another.

During the time that the tire is being vulcanized by the application of heat and pressure thereto, any air trapped within the tire or any gases generated during the vulcanization of the tire may be sufficient in volume to prevent the development of a satisfactory bond between the rubber material and the reinforcing cords within the tire or may break such bonds by forcing a separation between the rubber and the reinforcement cords. The resulting defects are known as blisters or blows.

A heretofore unrelated issue is the increasing demand for low rolling resistance tires. Due to this requirement, the quality and quantity of fillers added to carcass plies of pneumatic tires may be modified in the carcass components to reduce hysteresis. As a consequence, such tires may be borderline, or unacceptable, with regard to electrical conductivity.

### Summary of the Invention

The invention relates to a carcass ply in accordance with claim 1 and to a tire in accordance with claim 15.

Dependent claims refer to preferred embodiments of the invention.

In one aspect of the invention, a carcass ply for a pneumatic tire may include a plurality of load bearing cords calendered within a polymer matrix and a plurality of gas bleeder cords for moving gas away from an interface of the load bearing cords and the polymer matrix. The plurality of gas bleeder cords also function to conduct electrical charge from a belt structure of the pneumatic tire to a bead portion of the pneumatic tire.

According to another aspect of the present invention, the load bearing cords are preferably separate and distinct from the gas bleeder cords.

According to another aspect of the present invention, the load bearing cords are preferably arranged parallel to each other and to the gas bleeder cords or to the discharge cords respectively.

According to yet another aspect of the present invention, the gas bleeder cords are preferably laid on outer planar surfaces of the polymer matrix.

According to still another aspect of the present invention, the gas bleeder cords may comprise an organic fiber core for performing the gas bleeder function and a metal filament sheath for performing the electrical conduction function.

According to yet another aspect of the present invention, the organic fiber cord may be cotton and the metal filament may be steel.

According to yet another aspect of the present invention, the load bearing cords are preferably not in contact with the bleeder cords.

According to yet another aspect of the present invention, the bleeder cords and/or the discharge cords are laid on an exterior surface of the elastomeric matrix.

According to yet another aspect of the present invention, the organic fiber core of the bleeder cords may be cotton, rayon, nylon, polyester or glass and the metal filament sheath may be steel, copper or brass.

According to yet another aspect of the present invention, the volume resistivity of the carcass ply is preferably less than 10⁸ Ohm-cm, more preferably less than 10⁷ Ohm-cm or even less than 10⁶ Ohm-cm.

According to yet another aspect of the present invention, the bleeder cords or the discharge cords may be cords dipped in or coated with an electrically conductive coat with electrically conductive meaning a sufficient electrical conductivity to perform the required conduct function within the carcass ply so that the carcass ply preferably has a volume resistivity of less than 10⁸ Ohm-cm, more preferably less than 10⁷ Ohm-cm or even less than 10⁶ Ohm-cm.

According to yet another aspect of the present invention, the bleeder cords or the discharge cords may be hybrid cords comprising an electrically conductive fiber or filament.

According to yet another aspect of the present invention, the elastomeric matrix is preferably a conventional tire carcass ply rubber matrix.

According to yet another aspect of the present invention, the distance between parallel bleeder cords or discharge cords is preferably in a range of from 5 mm to 40 mm, alternatively of from 15 mm to 30 mm such as 25 mm.

### Brief Description of the Drawings

The present invention will be described by way of example and with reference to the accompanying drawings in which:
FIG. 1 is a schematic cross-sectional view of an example pneumatic tire for use with the present invention.
FIG. 2 is a schematic perspective, partially cutaway, view of a tire reinforcement ply in accordance with the present invention.
FIG. 3 is a schematic detail view of a cord from FIG. 2.

### Description of Examples of the Present Invention

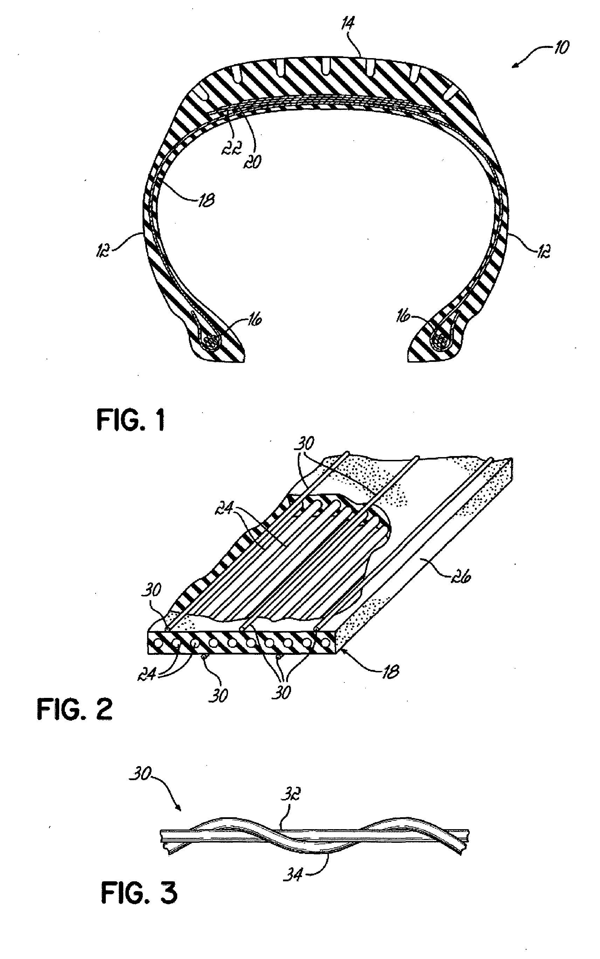

With reference to FIG. 1, a pneumatic tire 10 is shown including a pair of sidewall portions 12 terminating at their radially outer ends in a tread portion 14 and at their radially inner ends in a pair of beads 16. The tire 10 further includes at least one reinforcement ply 18 preferably secured to each of the beads 16 and extending through the sidewall portions 12 of the tire and under the tread portion 14. The tire 10 may have one or more reinforcement plies 18, which are generally referred to as carcass plies. The tire 10 may also include additional reinforcing plies in the form of one or more breaker or belt plies 20, 22 disposed in the crown region of the tire 10 between the carcass ply 18 and the tread portion 14.

The tire 10 may have a bias, bias belted, or radial ply construction. In each case, the reinforcing ply 18 may be composed of a plurality of reinforcing cords preferably extending in parallel spaced apart relation. In the case of a bias tire or bias belted construction, these reinforcing cords may extend at a suitable angle to the mid-circumferential center plane of the tire 10 at the circumferential centerline of the carcass ply 18, which angle may be, for example, from 25 to 40 degrees. In the case of a radial ply construction, the cords of the carcass ply 18 may extend substantially radially, for example, at an angle from 80 to 90 degrees to the mid-circumferential center plane of the tire 10.

The breaker or belt plies 20, 22 shown in FIG. 1 may each include a plurality of reinforcing cords extending in parallel spaced apart relation. The cords may extend at a relatively low angle, for example, 15 to 25 degrees when the belt plies 20, 22 are used in combination with a radial ply carcass and at a somewhat higher angle, perhaps 25 to 35 degrees when used in conjunction with a bias ply carcass either as a belt or as breaker plies. Where the breaker or belt plies 20, 22 are used in conjunction with a bias belted tire, the cords may have an angle at the mid-circumferential centerline of the tire 10 which is at least 5 degrees less than the corresponding angle of the carcass ply or plies 18, and where used as a breaker in conjunction with a bias tire may have an angle at the mid-circumferential centerline of the tire, which is equal or approximately equal to the corresponding angle of the carcass plies.

With reference to FIG. 2, there is shown a portion of an example ply 18 prior to the assembly of the ply into the tire 10. The ply 18 comprises a plurality of reinforcing cords 24 disposed in parallel spaced apart relation and a plurality of conductive, bleeder cords 30 in accordance with the present invention. The conductive, bleeder cords 30 are preferably substantially parallel to the reinforcing cords 24 and preferably lain on outer planar surfaces of a matrix of rubber or rubber-like polymer material 26 on one or both sides of the reinforcing cords 24. The reinforcing cords 24 may be calendered by passing the cords between rolls which press rubber 26 between the cords and coat the cords on both sides thereof with rubber or similar polymer. As will be seen from FIG. 2, each conductive, bleeder cord 30 may lie generally in a plane parallel to that defined by the reinforcing cords 24. The conductive, bleeder cords 30 may extend the full length of the reinforcing cords 24 (e.g., from radially under the belts 20, 22 to each bead 14). The conductive, bleeder cords 30 may thus conduct electrical charge from the belt structure 20, 22 to each bead 14. A conductive path may be defined by a conductive tread element, such as chimney, transferring electrical charge to a conductive tread base to the belt structure 20, 22 through the conductive, bleeder cords 30 to the beads 14 to a rim.

Thus, the conductive, bleeder cords 30 may provide a path for expulsion of air/gas through the tread portion 14 of the tire 10, and air/gas that is not expelled may be held/contained by the conductive, bleeder cords away from ply/rubber matrix interface. Each conductive, bleeder cord 30 may comprise a single yarn or a plurality of yarns/filaments, such as two yarns/filaments 32, 34 (FIG. 3) twisted together. The cords 30 may be a very low decitex cotton cord made electrically conductive by dipping the cords in a conductive coat. Alternatively, the cords 30 hay have a hybrid cord construction with a brass coated steel wire sheath or conductive fibers (e.g., conductive nano-material fibers twisted about a cotton fiber core). Such conductive, bleeder cords 30 may thus allow reduced hysteresis materials in skirt, sidewall, and ply components without reducing tire conductivity.

A yarn core 32 of the cords 30 may be composed of staple fibers selected from the group consisting of rayon, nylon, polyester, and/or glass for performing the air/gas bleed function of the cords. Such yarn 32 may not be intended to contribute to the reinforcement of the tire 10 and thus are not reinforcing cords. Each yarn 32 may have a breaking strength of between about 0.45 kg and 0.9 kg, which may be no greater than one-fifth of the breaking strength of a reinforcing cord 24. A break strength of about 0.45 kg may be necessary to assure that the yarn 32 does not break, until necessary, under the usual tensions to which the yarns are subjected during manufacture of the reinforcing ply 18. A filament sheath 34 of the cords 30 may be composed of a steel wire coated with brass for performing the electrical conductivity function of the cords.

As stated above, a carcass ply 12 of cords 30 in accordance with the present invention produces excellent electrical conduction in a tire 10 as well as allowing use of harder, less conductive materials in other parts of the tire 10 for improved rolling resistance. This carcass ply 12 thus enhances the performance of the tire 10, even though the complexities of the structure and behavior of the pneumatic tire are such that no complete and satisfactory theory has been propounded.

## Claims

1. A carcass ply for a pneumatic tire, the carcass ply (18) comprising a plurality of load bearing cords (24) calendared within an elastomeric matrix (26) and a plurality of at least one of (i) bleeder cords (30) for absorbing gas and/or for moving gas away from an interface of the load bearing cords (24) and the elastomeric matrix (26), and (ii) discharge cords, wherein the discharge cords are separate and distinct from the load bearing cords (24) and not in contact with the load bearing cords (24), **characterized in that** the plurality of bleeder cords (30) and the plurality of discharge cords respectively have an electrical conductivity sufficient to conduct electrical charge from a belt structure (20, 22) of a pneumatic tire (10) comprising the carcass ply (18) via the carcass ply (18) to a bead portion of the pneumatic tire (10).

2. The carcass ply of claim 1 comprising the bleeder cords (30) as gas bleeder cords for moving gas away from an interface of the load bearing cords (24) and the elastomeric matrix (26).

3. The carcass ply of claim 1 or 2 wherein the load bearing cords (24) are separate and distinct from the bleeder cords (30).

4. The carcass ply of claim 1, 2 or 3 wherein the load bearing cords (24) are not in contact with the bleeder cords (30).

5. The carcass ply of at least one of the previous claims wherein the load bearing cords (24) are arranged parallel to each other and to the bleeder cords (30) or to the discharge cords (30) respectively.

6. The carcass ply of at least one of the previous claims wherein the bleeder cords (30) and/or the discharge cords are laid on an exterior surface of the elastomeric matrix (26).

7. The carcass ply of at least one of the previous claims wherein the bleeder cords (30) comprise an organic fiber core for performing the bleeder function and an electrically conductive sheath, preferably a metallic sheath, for performing the electrical conduction function.

8. The carcass ply of claim 7 wherein the organic fiber core is cotton, rayon, nylon, polyester or glass and wherein the metal filament sheath is steel, copper or brass.

9. The carcass ply of at least one of the previous claims wherein the volume resistivity of the carcass ply (18) is less than 10⁸ Ohm-cm.

10. The carcass ply of at least one of the previous claims wherein the volume resistivity of the carcass ply (18) is less than 10⁷ Ohm-cm, alternatively less than 10⁶ Ohm-cm.

11. The carcass ply of at least one of the previous claims wherein the bleeder cords (30) or the discharge cords are cords dipped in or coated with an electrically conductive coat.

12. The carcass ply of at least one of the previous claims wherein the bleeder cords (30) or the discharge cords are hybrid cords comprising an electrically conductive fiber or filament.

13. The carcass ply of at least one of the previous claims wherein the elastomeric matrix (26) is a conventional tire carcass ply rubber matrix.

14. The carcass ply of at least one of the previous claims wherein the distance between parallel bleeder cords (30) or discharge cords is in a range of from 5 mm to 40 mm, alternatively of from 15 mm to 30 mm such as 25 mm.

15. A pneumatic tire comprising two bead portions; a carcass ply (18) extending between the bead portions; a belt structure disposed radially outward from the carcass ply (18); and a tread portion (14) located radially outward from the carcass ply (18) and belt structure, wherein the carcass ply (18) is a carcass ply in accordance with at least one of the previous claims.

## Patentansprüche

1. Karkassenlage für einen Luftreifen, wobei die Karkassenlage (18) eine Vielzahl von lasttragenden Korden (24), die in eine Elastomermatrix (26) kalandert sind, und eine Vielzahl von mindestens einem von (i) Entlüftungskorden (30) zum Absorbieren von Gas und/oder zum Wegbewegen von Gas von einer Schnittstelle der lasttragenden Korde (24) und der Elastomermatrix (26), und (ii) Abfuhrkorden umfasst, wobei die Abfuhrkorde separat und getrennt von den lasttragenden Korden (24) und nicht in Kontakt mit den lasttragenden Korden (24) sind, **dadurch gekennzeichnet, dass** die Vielzahl von Entlüftungskorden (30) beziehungsweise die Vielzahl von Abfuhrkorden eine elektrische Leitfähigkeit aufweisen, die ausreicht, um elektrische Ladung von einer Gürtelstruktur (20, 22) eines Luftreifens (10), der die Karkassenlage (18) umfasst, über die Karkassenlage (18) zu einem Wulstbereich des Luftreifens (10) zu leiten.

2. Karkassenlage nach Anspruch 1, umfassend die Entlüftungskorde (30) als Gas-Entlüftungskorde zum Wegbewegen von Gas von einer Schnittstelle der lasttragenden Korde (24) und der Elastomermatrix (26).

3. Karkassenlage nach Anspruch 1 oder 2, wobei die lasttragenden Korde (24) separat und getrennt von den Entlüftungskorden (30) sind.

4. Karkassenlage nach Anspruch 1, 2 oder 3, wobei die lasttragenden Korde (24) nicht in Kontakt mit den Entlüftungskorden (30) sind.

5. Karkassenlage nach mindestens einem der vorgenannten Ansprüche, wobei die lasttragenden Korde (24) parallel zueinander und zu den Entlüftungskorden (30) beziehungsweise zu den Abfuhrkorden (30) angeordnet sind.

6. Karkassenlage nach mindestens einem der vorgenannten Ansprüche, wobei die Entlüftungskorde (30) und/oder die Abfuhrkorde auf eine Außenfläche der Elastomermatrix (26) aufgelegt sind.

7. Karkassenlage nach mindestens einem der vorgenannten Ansprüche, wobei die Entlüftungskorde (30) einen organischen Faserkern zur Durchführung der Entlüftungsfunktion und einen elektrisch leitfähigen Mantel, bevorzugt einen Metallmantel, zur Durchführung der elektrischen Leitfähigkeitsfunktion umfassen.

8. Karkassenlage nach Anspruch 7, wobei der organische Faserkern aus Baumwolle, Rayon, Nylon, Polyester oder Glas ist und wobei der Metallfilamentmantel aus Stahl, Kupfer oder Messing ist.

9. Karkassenlage nach mindestens einem der vorgenannten Ansprüche, wobei der Durchgangswiderstand der Karkassenlage (18) weniger als 10⁸ Ohm-cm beträgt.

10. Karkassenlage nach mindestens einem der vorgenannten Ansprüche, wobei der Durchgangswiderstand der Karkassenlage (18) weniger als 10⁷ Ohm-cm beträgt, alternativ weniger als 10⁶ Ohm-cm.

11. Karkassenlage nach mindestens einem der vorgenannten Ansprüche, wobei die Entlüftungskorde (30) oder die Abfuhrkorde Korde sind, die in einen elektrisch leitfähigen Überzug getaucht oder damit beschichtet sind.

12. Karkassenlage nach mindestens einem der vorgenannten Ansprüche, wobei die Entlüftungskorde (30) oder die Abfuhrkorde hybride Korde sind, die eine elektrisch leitfähige Faser oder Filament umfassen.

13. Karkassenlage nach mindestens einem der vorgenannten Ansprüche, wobei die Elastomermatrix (26) eine herkömmliche Reifenkarkassenlagen-Kautschukmatrix ist.

14. Karkassenlage nach mindestens einem der vorgenannten Ansprüche, wobei der Abstand zwischen parallelen Entlüftungskorden (30) oder Abfuhrkorden im Bereich von 5 mm bis 40 mm, alternativ von 15 mm bis 30 mm, wie etwa 25 mm, liegt.

15. Luftreifen, umfassend zwei Wulstbereiche; eine sich zwischen den Wulstbereichen erstreckende Karkassenlage (18); eine radial auswärts von der Karkassenlage (18) angeordnete Gürtelstruktur; und einen radial auswärts von der Karkassenlage (18) und Gürtelstruktur befindlichen Laufflächenteil (14), wobei die Karkassenlage (18) eine Karkassenlage gemäß mindestens einem der vorgenannten Ansprüche ist.

## Revendications

1. Nappe de carcasse pour un bandage pneumatique, la nappe de carcasse (18) comprenant plusieurs câblés porteurs (24) calandrés avec une matrice élastomère (26) et plusieurs câblés au moins choisis parmi (i) des câblés de purge (30) pour absorber les gaz et/ou pour évacuer les gaz d'une interface entre les câblés porteurs (24) et la matrice élastomère (26) et (ii) des câblés de décharge, les câblés de décharge étant séparés et distincts des câblés porteurs (24) et n'entrant pas en contact avec les câblés porteurs (24), **caractérisée en ce que** lesdits plusieurs câblés de purge (30) et lesdits plusieurs câblés de décharge respectivement possèdent une conductivité électrique suffisante pour conduire une charge électrique à partir d'une structure de ceinture (20, 22) d'un bandage pneumatique (10) comprenant la nappe de carcasse (18) via la nappe de carcasse (18) jusqu'à une portion de talon du bandage pneumatique (10).

2. Nappe de carcasse selon la revendication 1, comprenant les câblés de purge (30) à titre de câblés de purge de gaz pour évacuer le gaz d'une interface entre les câblés porteurs (24) et la matrice élastomère (26).

3. Nappe de carcasse selon la revendication 1 ou 2, dans lequel les câblés porteurs (24) sont séparés et distincts des câblés de purge (30) .

4. Nappe de carcasse selon la revendication 1, 2 ou 3, dans lequel les câblés porteurs (24) n'entrent pas en contact avec les câblés de purge (30).

5. Nappe de carcasse selon au moins une des revendications précédentes, dans laquelle les câblés porteurs (24) sont arrangés parallèlement les uns aux autres et parallèlement aux câblés de purge (30) ou aux câblés de décharge (30), respectivement.

6. Nappe de carcasse selon au moins une des revendications précédentes, dans laquelle les câblés de purge (30) et/ou les câblés de décharge sont posés sur la surface externe de la matrice élastomère (26).

7. Nappe de carcasse selon au moins une des revendications précédentes, dans laquelle les câblés de purge (30) comprennent une partie centrale constituée par des fibres organiques pour remplir la fonction de purge et une gaine électroconductrice, de préférence une gaine métallique pour remplir la fonction de conduction électrique.

8. Nappe de carcasse selon la revendication 7, dans laquelle la partie centrale constituée par des fibres organiques représente du coton, de la rayonne, du nylon, du polyester ou du verre, et dans laquelle la gaine constituée par des filaments métalliques représente de l'acier, du cuivre ou du laiton.

9. Nappe de carcasse selon au moins une des revendications précédentes, dans laquelle la résistivité transversale de la nappe de carcasse (18) est inférieure à 10⁸ Ohm-cm.

10. Nappe de carcasse selon au moins une des revendications précédentes, dans laquelle la résistivité transversale de la nappe de carcasse (18) est inférieure à 10⁷ Ohm-cm, en variante inférieure à 10⁸ Ohm-cm.

11. Nappe de carcasse selon au moins une des revendications précédentes, dans laquelle les câblés de purge (30) ou les câblés de décharge sont des câblés plongés dans ou enrobés d'un revêtement électroconducteur.

12. Nappe de carcasse selon au moins une des revendications précédentes, dans laquelle les câblés de purge (30) ou les câblés de décharge sont des câblés hybrides comprenant une fibre ou un filament électroconducteur.

13. Nappe de carcasse selon au moins une des revendications précédentes, dans laquelle la matrice élastomère (26) est une matrice en caoutchouc conventionnelle pour une nappe de carcasse de bandage pneumatique.

14. Nappe de carcasse selon au moins une des revendications précédentes, dans laquelle la distance entre des câblés parallèles de purge (30) ou des câblés de décharge se situe dans la plage de 5 mm à 40 mm, en variante de 15 mm à 30 mm, par exemple s'élève à 25 mm.

15. Bandage pneumatique comprenant deux portions de talons, une nappe de carcasse (18) s'étendant entre les portions de talons, une structure de ceinture disposée en direction radiale à l'extérieur de la nappe de carcasse (18), et une portion de bande de roulement (14) située en direction radiale à l'extérieur de la nappe de carcasse (18) et de la structure de ceinture, la nappe de carcasse (18) représentant une nappe de carcasse selon au moins une des revendications précédentes.
